# EUROPEAN PATENT APPLICATION

(11) **EP 3 396 174 A1**
(43) Date of publication of application: **31.10.2018**
(21) Application number: 16878073.2
(22) Date of filing: 20.09.2016
(51) Int. Cl.: F15B 11/00, F15B 20/00, F16K 1/00

(54) **VALVE DEVICE**

(30) Priority: 24.12.2015 JP 2015252110
(71) Applicant: KYB Corporation, Tokyo 105-6111 (JP)
(72) Inventor: TERAO, Takeshi, Tokyo 105-6111 (JP)
(74) Representative: Grünecker Patent- und Rechtsanwälte PartG mbB
(86) International application number: PCT/JP2016/077693
(87) International publication number: WO 2017/110177

(57) **Abstract**

A back-pressure control valve (40) includes: a switching valve (50) configured to open and close the connecting passage (13); and an emergency operation valve (60) provided in the branch passage (14), the emergency operation valve (60) being configured to open and close the branch passage (14) by being operated manually. The emergency operation valve (60) has a valve main body (11) and a valve body (61). The valve body (61) includes: the main body portion (62) having the screw portion (62a) threaded into the valve main body (11); and the seat portion (63) formed on the tip end of the main body portion (62), the seat portion (63) being configured to open and close the branch passage (14) by being seated on and separated from the valve seat (16c) provided in the accommodating hole (16).

## Description

### TECHNICAL FIELD

The present invention relates to a valve device.

### BACKGROUND ART

JP2015-1249A discloses a hydraulic pressure control device provided with a shut-off valve for guiding pressure in a back pressure chamber of an operation check valve to a tank passage by a manual operation in a case in which a solenoid valve is failed and a lift cylinder cannot be lowered. The shut-off valve disclosed in JP2015-1249A is provided with a plug that is screwed into a valve-main-body, a valve portion that is accommodated in the plug, a locking screw that presses the valve portion against a seat portion, and a nut that fixes the locking screw.

### SUMMARY OF INVENTION

With the hydraulic pressure control device disclosed in JP2015-1249A, because the shut-off valve is formed of a plurality of members, simplification of the structure thereof is required.

An object of the present invention is to provide a valve device provided with an emergency operation valve having a simple structure.

According to an aspect of the present invention, a valve device for controlling pressure in a back pressure chamber of an operation check valve that blocks a flow of working fluid discharged from a pressure chamber of a fluid pressure actuator in accordance with the pressure in the back pressure chamber includes: a connecting passage configured to connect the back pressure chamber of the operation check valve to a tank; a switching valve provided in the connecting passage, the switching valve being configured to open and close the connecting passage; a branch passage branched from the connecting passage at the upstream side of the switching valve so as to communicate with the tank; and an emergency operation valve provided in the branch passage, the emergency operation valve being configured to open and close the branch passage by being operated manually, wherein the emergency operation valve has: a valve main body; and a valve body accommodated in accommodating hole formed in the valve main body, the valve body being configured to open and close the branch passage, and wherein the valve body includes: a main body portion having a screw portion threaded into the valve main body; and a seat portion formed on a tip end of the main body portion, the seat portion being configured to open and close the branch passage by being seated on and separated from a valve seat provided in the accommodating hole.

### BRIEF DESCRIPTION OF DRAWINGS

[FIG. 1] FIG. 1 is a hydraulic pressure circuit diagram using a valve device according to an embodiment of the present invention.
[FIG. 2] FIG. 2 is a sectional view of a structure of the valve device according to the embodiment of the present invention.
[FIG. 3] FIG. 3 is an enlarged view of an emergency operation valve according to the embodiment of the present invention.

### DESCRIPTION OF EMBODIMENTS

A back-pressure control valve 40 serving as a valve device according to an embodiment of the present invention will be described below with reference to the drawings.

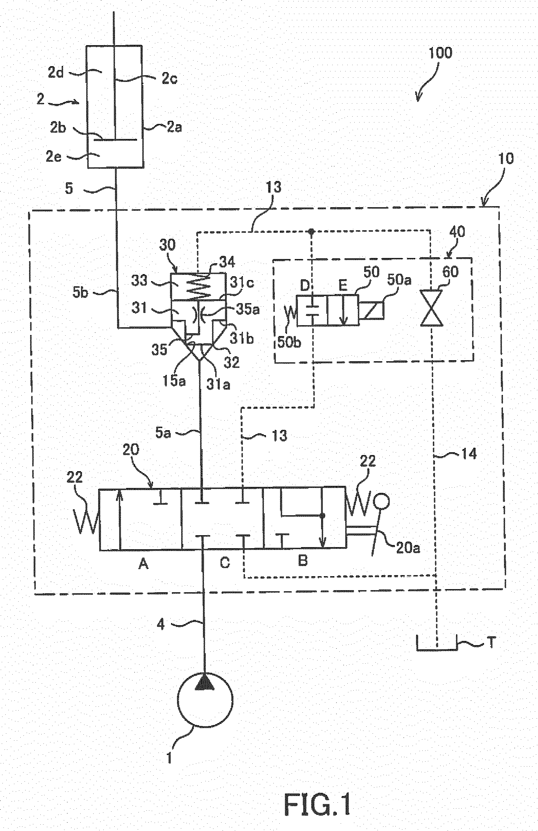

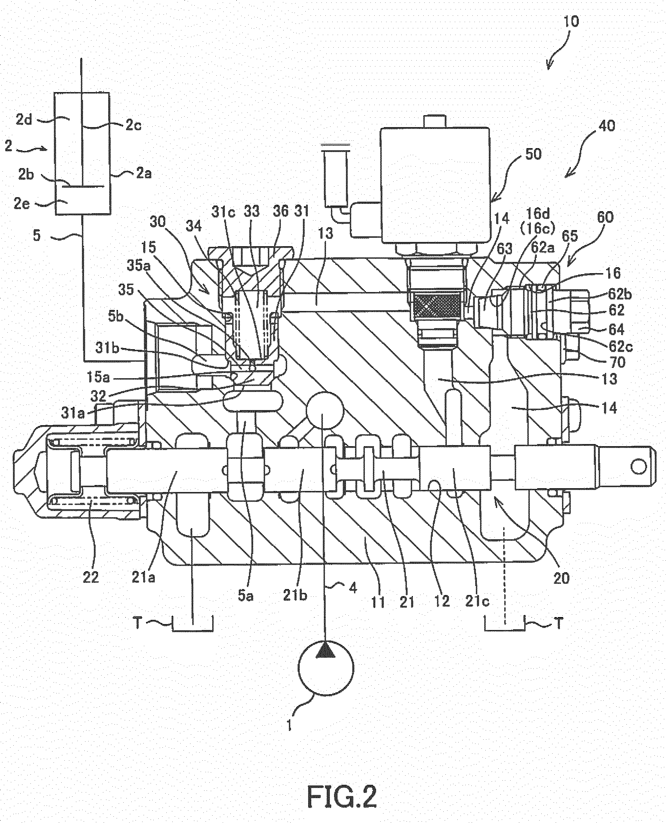

A fluid pressure control device 100 utilizing the back-pressure control valve 40 will be described first with reference to FIGs. 1 and 2.

The fluid pressure control device 100 controls action of a hydraulic working equipment, such as a forklift , a crane, a hydraulic shovel, and so forth. With this embodiment, a case in which extension/contraction of a lift cylinder 2 used in the forklift is controlled is explained.

FIG. 1 is a diagram showing a hydraulic pressure circuit of the fluid pressure control device 100. Although working oil is used as working fluid in the fluid pressure control device 100, other fluid such as working water etc. may also be used as the working fluid. The fluid pressure control device 100 includes a pump 1 that discharges the working oil, a valve unit 10 that is provided in a flow channel connecting the pump 1 and the lift cylinder 2 and that controls action of the lift cylinder 2, a supply flow channel 4 that connects the pump 1 and the valve unit 10, and a supply/discharge flow channel 5 that connects the lift cylinder 2 and the valve unit 10.

The pump 1 is driven by a motive force of an engine (not shown) mounted on the forklift and discharges the working oil to the supply flow channel 4. Although the pump 1 is shown as a fixed displacement pump in FIG. 1, the configuration is not limited thereto, and the pump 1 may be of a variable displacement type.

The lift cylinder 2 includes a piston 2b that moves in a cylinder 2a in a slidable manner and a piston rod 2c that is connected to the piston 2b and projects out to the outside of the cylinder 2a. An interior of the cylinder 2a is partitioned by the piston 2b into a rod side chamber 2d and a counter rod side chamber 2e serving as a pressure chamber. The rod side chamber 2d communicates with the atmosphere, and the counter rod side chamber 2e is connected to a supply/discharge flow channel 5. As described above, the lift cylinder 2 is configured as a single acting hydraulic cylinder.

The valve unit 10 includes a control valve 20 that controls moving direction of the lift cylinder 2, an operation check valve 30 that allows flow of the working fluid to the counter rod side chamber 2e of the lift cylinder 2 and blocks flow of the working oil that has been discharged from the counter rod side chamber 2e in accordance with the pressure in a back pressure chamber 33, which will be described later, and the back-pressure control valve 40 that controls the pressure in the back pressure chamber 33 of the operation check valve 30.

The control valve 20 has an extension position A at which the working oil that has been discharged from the pump 1 to the supply flow channel 4 is guided to the counter rod side chamber 2e of the lift cylinder 2 through the supply/discharge flow channel 5, a contraction position B at which the working oil that has been discharged from the counter rod side chamber 2e of the lift cylinder 2 is guided to a tank T through the supply/discharge flow channel 5, and a neutral position C at which the communication between the counter rod side chamber 2e of the lift cylinder 2 and both of the pump 1 and the tank T is blocked. The control valve 20 is switched when a crew of a machinery operates an operation lever 20a. The control valve 20 may be of a pilot controlled type or electromagnetically controlled type.

The operation check valve 30 includes a valve body 31 that opens/closes the supply/discharge flow channel 5, a seat portion 32 that is seated on a valve seat 15a formed on a valve main body 11, which will be described later, the back pressure chamber 33 that is defined behind the valve body 31, a spring 34 that biases the valve body 31 towards the valve seat 15a, and a restrictor passage 35 that is formed in the valve body 31 and that guides the working oil in the counter rod side chamber 2e to the back pressure chamber 33. The restrictor passage 35 is provided with a restrictor 35a.

In the valve unit 10, the supply/discharge flow channel 5 is divided into a control-valve-side supply/discharge flow channel 5a and a cylinder-side supply/discharge flow channel 5b by the valve body 31. The control-valve-side supply/discharge flow channel 5a connects the control valve 20 and the operation check valve 30, and the cylinder-side supply/discharge flow channel 5b connects the operation check valve 30 and the lift cylinder 2.

The valve body 31 is formed with a first pressure receiving surface 31a on which the pressure in the control-valve-side supply/discharge flow channel 5a acts, a second pressure receiving surface 31b on which the pressure in the counter rod side chamber 2e acts via the cylinder-side supply/ discharge flow channel 5b, and a third pressure receiving surface 31c on which the pressure in the back pressure chamber 33 acts. The pressure acting on the first pressure receiving surface 31a and the second pressure receiving surface 31b acts in the valve opening direction of the valve body 31, and the pressure acting on the third pressure receiving surface 31c and a biasing force exerted by the spring 34 acts in the valve closing direction of the valve body 31. With such a configuration, opening and closing of the valve body 31 is controlled in accordance with the difference between the total load due to the pressure acting on the first pressure receiving surface 31a and the second pressure receiving surface 31b and the total of the load due to the pressure acting on the third pressure receiving surface 31c and the biasing force exerted by the spring 34.

In a state in which the seat portion 32 is seated on the valve seat 15a, the operation check valve 30 exhibits a function as a check valve that blocks a flow of the working oil from the counter rod side chamber 2e to the control valve 20. With such a configuration, the operation check valve 30 holds load pressure by preventing leakage of the working oil in the counter rod side chamber 2e, and holds a stopped state (position) of the lift cylinder 2.

The back-pressure control valve 40 includes a connecting passage 13 that connects the back pressure chamber 33 of the operation check valve 30 to the tank T, a switching valve 50 that is provided in the connecting passage 13 and opens/closes the connecting passage 13, a branch passage 14 that is branched from the connecting passage 13 and allows the back pressure chamber 33 to communicate with the tank T, and an emergency operation valve 60 that is provided in the branch passage 14 and opens/closes the branch passage 14 by being operated manually.

The switching valve 50 is formed of a normally closed electromagnetic switching valve. Specifically, in a case in which current is not applied, the switching valve 50 is positioned at a close position (a blocking position D) at which the connecting passage 13 is closed by the biasing force exerted by a spring 50b. In contrast, in a case in which a predetermined current is applied to a solenoid 50a, the switching valve 50 is switched to an open position (communication position E) at which the biasing force is exerted by the solenoid 50a against the biasing force exerted by the spring 50b and the connecting passage 13 is opened.

The branch passage 14 is branched from the connecting passage 13 at the upstream side of the switching valve 50 and communicates with the tank T by bypassing the control valve 20. The emergency operation valve 60 is provided in the branch passage 14. The emergency operation valve 60 is provided so as to open the branch passage 14 by being operated manually to discharge the working oil in the back pressure chamber 33 to the tank T in a case in which the switching valve 50 is failed.

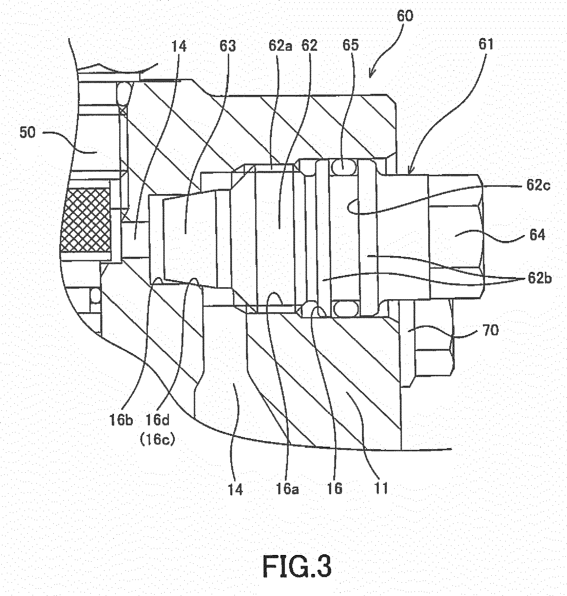

Next, specific configurations of the respective valves (the control valve 20, the operation check valve 30, and the emergency operation valve 60) in the valve unit 10 will be described with reference to FIGs. 2 and 3. FIG. 2 is a structure sectional view of the valve unit 10. FIG. 3 is an enlarged view of the emergency operation valve 60. The control valve 20, the operation check valve 30, the switching valve 50, and the emergency operation valve 60 are provided in the common valve main body 11.

A structure of the control valve 20 will be described first.

The control valve 20 includes a spool 21 and a spring 22. The spool 21 serves as a valve body that is accommodated in an accommodating hole 12 formed in the valve main body 11, that blocks and allows the communication between the supply flow channel 4 and the supply/discharge flow channel 5, and that blocks and allows the communication between the supply/discharge flow channel 5 and the tank T. The spring 22 is provided at the one end of the spool 21 and biases the valve body to the neutral position C.

The spool 21 includes a first land portion 21a, a second land portion 21b, and a third land portion 21c that slide along an inner circumferential surface of the accommodating hole 12. The first land portion 21a controls the communication between the control-valve-side supply/discharge flow channel 5a and the tank T. The second land portion 21b controls the communication between the supply flow channel 4 and the control-valve-side supply/discharge flow channel 5a. The third land portion 21c controls the communication between the connecting passage 13 and the tank T.

In a state in which the spool 21 is positioned as shown in FIG. 2, the control valve 20 is positioned at the neutral position C. At this time, the first land portion 21a, the second land portion 21b, and the third land portion 21c block the communication between the control-valve-side supply/discharge flow channel 5a and the tank T, the communication between the supply flow channel 4 and the control-valve-side supply/discharge flow channel 5a, and the communication between the connecting passage 13 and the tank T, respectively.

As the spool 21 moves in the right direction in FIG. 2 from the state shown in FIG. 2, the control valve 20 is switched to the extension position A. Specifically, the second land portion 21b is moved, and the communication between the supply flow channel 4 and the control-valve-side supply/discharge flow channel 5a is allowed. At this time, although the first land portion 21a and the third land portion 21c are also moved, the state in which the communication between the control-valve-side supply/discharge flow channel 5a and the tank T is blocked and the communication between the connecting passage 13 and the tank T is blocked is maintained.

In contrast, as the spool 21 moves in the left direction in FIG. 2 from the state shown in FIG. 2, the control valve 20 is switched to the contraction position B. Specifically, the first land portion 21a is moved such that the control-valve-side supply/discharge flow channel 5a is connected to the tank T, and the third land portion 21c is moved such that the connecting passage 13 is connected to the tank T. At this time, although the second land portion 21b is also moved, the state in which the communication between the supply flow channel 4 and the control-valve-side supply/discharge flow channel 5a is blocked is maintained.

Next, a structure of the operation check valve 30 will be described.

The operation check valve 30 is configured by accommodating the valve body 31 and the spring 34 in an accommodating hole 15 formed in the valve main body 11, and by closing an opening of the accommodating hole 15 with a plug 36.

The back pressure chamber 33 is defined between the valve body 31 and the plug 36 in the accommodating hole 15. A part of the working oil that has flowed into the cylinder-side supply/discharge flow channel 5b is guided to the back pressure chamber 33 through the restrictor passage 35.

Next, a structure of the emergency operation valve 60 will be described with reference to FIGs. 2 and 3.

The emergency operation valve 60 includes a valve body 61 that is accommodated in an accommodating hole 16 formed in the valve main body 11 and that opens/closes the branch passage 14.

The valve body 61 has a main body portion 62 having a screw portion 62a that is threaded into the valve main body 11, a seat portion 63 that is formed on a tip end of the main body portion 62 and that blocks the branch passage 14 by being seated on a valve seat 16c provided in the accommodating hole 16, an annular projected portion 62b that is formed on an outer circumferential surface of the main body portion 62 so as to project outwards in the radial direction, an annular groove 62c formed in the projected portion 62b, an O-ring 65 that is received in the annular groove 62c and
provides a sealing between the valve main body 11 and the valve body 61, and an operation portion 64 for operating the valve body 61 that is provided on the other side of the screw portion 62a of the main body portion 62 such that the projected portion 62b is positioned between the operation portion 64 and the screw portion 62a.

The accommodating hole 16 is formed with a fastening bore 16a that is formed with a female screw, a fitting hole 16b that has a diameter smaller than that of the fastening bore 16a and into which the seat portion 63 fits, and a plastically deformed portion 16d that is formed in a boundary between the fastening bore 16a and the fitting hole 16b and that is plastically deformed by the seat portion 63.

An outer circumferential surface of the seat portion 63 is formed to have a tapered shape whose diameter is gradually reduced towards the tip end. When the valve body 61 is threaded, the seat portion 63 enters into the fitting hole 16b and is brought into contact with the valve seat 16c. When the valve body 61 is further threaded from this state, the valve seat 16c is pressed and squeezed by the seat portion 63, and the plastically deformed portion 16d is formed. As described above, the plastically deformed portion 16d is formed by the plastic deformation of the valve seat 16c.

With such a configuration, because a state in which the valve seat 16c (the plastically deformed portion 16d) is brought into surface contact with the seat portion 63 is achieved, it is possible to prevent the leakage of the working oil from between the valve seat 16c (the plastically deformed portion 16d) and the seat portion 63 with high reliability. Furthermore, because the frictional resistance between the valve seat 16c (the plastically deformed portion 16d) and the seat portion 63 is increased, it is possible to prevent the valve body 61 from being loosened. Therefore, there is no need to provide a locking device.

For example, the operation portion 64 is formed to have a hexagonal column shape that can engage with a tool like a spanner. The valve body 61 can be tightened or removed by the tool engaged with the operation portion 64. The operation portion 64 may have a shape such that the operation portion 64 can be manually operated directly without using the tool etc. For example, a handle may be provided.

In the emergency operation valve 60, after the valve body 61 is threaded into the accommodating hole 16, a bolt 70 serving as a restricting member is attached to the valve main body 11. The bolt 70 is attached such that its head portion covers the accommodating hole 16. With such a configuration, when the valve body 61 is loosened, the projected portion 62b is brought into contact with the head portion of the bolt 70, and the movement of the valve body 61 is restricted. Therefore, the valve body 61 is prevented from being fallen off from the accommodating hole 16. The restricting member may be a plate, etc. as long as the restricting member can cover a part of the accommodating hole 16 and can be brought into contact with the projected portion 62b.

An action of the fluid pressure control device 100 configured as above will be described.

A case in which the lift cylinder 2 is lifted up will be described.

In order to lift up the lift cylinder 2, the spool 21 of the control valve 20 is moved in the right direction in FIG. 2. In other words, the control valve 20 is switched to the extension position A. By doing so, the communication between the supply flow channel 4 and the control-valve-side supply/discharge flow channel 5a is allowed. Therefore, the working oil that has been discharged from the pump 1 acts on the first pressure receiving surface 31a of the valve body 31 of the operation check valve 30 via the supply flow channel 4 and the control-valve-side supply/discharge flow channel 5a. At this time, the current is not applied to the switching valve 50, and the switching valve 50 is held at the blocking position D by the biasing force exerted by the spring 50b.

When the load due to the pressure acting on the first pressure receiving surface 31a of the valve body 31 exceeds the biasing force exerted by the spring 34, the valve body 31 is opened against the biasing force exerted by the spring 34. With such a configuration, the working oil that has been discharged from the pump 1 is supplied to the counter rod side chamber 2e via the supply flow channel 4, the control-valve-side supply/discharge flow channel 5a, and the cylinder-side supply/discharge flow channel 5b, and the lift cylinder 2 is extended. At this time, a part of the working oil that has flowed into the cylinder-side supply/discharge flow channel 5b is guided to the back pressure chamber 33 through the restrictor passage 35. Because the restrictor 35a is provided in the restrictor passage 35, the working oil is supplied to the lift cylinder 2 with preference. Therefore, while the lift cylinder 2 is extended, the valve body 31 is prevented from being closed due to the increase in the pressure in the back pressure chamber 33.

Next, a case in which a position of the lift cylinder 2 is held in a state in which the lift cylinder 2 is stopped will be described.

In order to hold the position of the lift cylinder 2, the spool 21 of the control valve 20 is brought back to the state shown in FIG. 2. In other words, the control valve 20 is switched to the neutral position C. By doing so, the communication between the supply flow channel 4 and the control-valve-side supply/discharge flow channel 5a is blocked. At this time, although the pressure of the working oil in the counter rod side chamber 2e is increased by the load of the lift cylinder 2, this pressure is transmitted to the back pressure chamber 33 via the restrictor passage 35 and acts on the third pressure receiving surface 31c. With such a configuration, the total load of the load due to the pressure of the working oil acting on the third pressure receiving surface 31c and the biasing force exerted by the spring 34 becomes greater than the total load due to the pressure of the working oil acting on the first pressure receiving surface 31a and the second pressure receiving surface 31b, and therefore, the valve body 31 is closed. Therefore, the working oil in the counter rod side chamber 2e of the lift cylinder 2 is not discharged, and the position of the lift cylinder 2 is held.

Next, a case in which the lift cylinder 2 is lowered will be described.

In order to lower the lift cylinder 2, the spool 21 of the control valve 20 is moved in the left direction in FIG. 2. In other words, the control valve 20 is switched to the contraction position B. By doing so, the communication between the control-valve-side supply/discharge flow channel 5a and the tank T is allowed, and the communication between the connecting passage 13 and the tank T is allowed. At this time, the switching valve 50 is switched to the communication position E. By doing so, the back pressure chamber 33 is communicated with the tank T via the connecting passage 13. Therefore, the working oil in the back pressure chamber 33 is discharged to the tank T.

As the working oil in the back pressure chamber 33 is discharged to the tank T, because the pressure of the working oil acting on the third pressure receiving surface 31c is lowered, the total load of the load due to the pressure of the working oil acting on the third pressure receiving surface 31c and the biasing force exerted by the spring 34 becomes smaller than the total load due to the pressure of the working oil acting on the first pressure receiving surface 31a and the second pressure receiving surface 31b, and therefore, the valve body 31 is closed. With such a configuration, the working oil that has been discharged from the counter rod side chamber 2e of the lift cylinder 2 is discharged to the tank T via the cylinder-side supply/discharge flow channel 5b and the control-valve-side supply/discharge flow channel 5a, and the lift cylinder 2 is contracted.

Next, a function of the emergency operation valve 60 in the fluid pressure control device 100 will be described.

In the fluid pressure control device 100, when, for example, the switching valve 50 is failed and cannot be switched to the communication position E, because the working oil in the back pressure chamber 33 cannot be discharged, the lift cylinder 2 is no longer be contracted.

In such a case, by manually operating the emergency operation valve 60 to open the branch passage 14, the working oil in the back pressure chamber 33 can be discharged to the tank T by bypassing the switching valve 50. By doing so, because the pressure of the working oil acting on the third pressure receiving surface 31c is reduced, the total load of the load due to the pressure of the working oil acting on the third pressure receiving surface 31c and the biasing force exerted by the spring 34 becomes smaller than the total load due to the pressure of the working oil acting on the first pressure receiving surface 31a and the second pressure receiving surface 31b, and therefore, the valve body 31 of the operation check valve 30 is opened. Therefore, the working oil in the counter rod side chamber 2e of the lift cylinder 2 is discharged to the tank T via the cylinder-side supply/discharge flow channel 5b and the control-valve-side supply/discharge flow channel 5a. As described above, even if the switching valve 50 is failed, the lift cylinder 2 can be contracted by manually operating the emergency operation valve 60.

According to the above-mentioned embodiment, following advantages are afforded.

The emergency operation valve 60 has the valve body 61 that is accommodated in the accommodating hole 16 formed in the valve main body 11 and that opens/closes the branch passage 14. The valve body 61 includes the main body portion 62 that has a screw portion threaded into the valve main body 11 and the seat portion 63 that is formed on the tip end of the main body portion 62 and opens/closes the branch passage 14 by being seated on and separated from the valve seat 16c provided in the accommodating hole 16. With such a configuration, because the valve body 61 of the emergency operation valve 60 can be configured as one member, it is possible to simplify the structure of the emergency operation valve 60.

In addition, because the valve body 61 of the emergency operation valve 60 is configured as one member, it is possible to perform assembly and operation of the emergency operation valve 60 only by one hand, and the work efficiency can be improved. Furthermore, by threading the valve body 61 such that the valve seat 16c of the valve main body 11 is plastically deformed, the valve seat 16c is pressed and squeezed by the seat portion 63, and the plastically deformed portion 16d is formed. With such a configuration, because a state in which the valve seat 16c (the plastically deformed portion 16d) is brought into surface contact with the seat portion 63 is achieved, it is possible to prevent the leakage of the working oil from between the valve seat 16c (the plastically deformed portion 16d) and the seat portion 63 with high reliability. Furthermore, because the frictional resistance between the valve seat 16c (the plastically deformed portion 16d) and the seat portion 63 is increased, it is possible to prevent the valve body 61 from being loosened. Therefore, there is no need to provide a locking device of the valve body 61, and so, it is possible to reduce the number of parts.

In the emergency operation valve 60, the projected portion 62b is formed on the main body portion 62 so as to project outwards in the radial direction, and the projected portion 62b is brought into contact with the bolt 70 attached to the valve main body 11. With such a configuration, the movement of the valve body 61 is restricted, and it is possible to prevent the valve body 61 from falling off from the valve main body 11 when the valve body 61 is loosened.

The switching valve 50 and the emergency operation valve 60 are provided in the valve main body 11 integrally so as to form the back-pressure control valve 40. With such a configuration, it is possible to reduce a size of the device. Furthermore, the switching valve 50, the emergency operation valve 60, the control valve 20, and the operation check valve 30 are provided in the valve main body 11 integrally so as to form the valve unit 10. With such a configuration, it is possible to further reduce the size of the device.

Configurations, operations, and effects of the embodiment of the present invention configured as above will be collectively described.

The valve device (the back-pressure control valve 40) includes: the connecting passage 13 configured to connect the back pressure chamber 33 of the operation check valve 30 to the tank T; the switching valve 50 provided in the connecting passage 13, the switching valve 50 being configured to open and close the connecting passage 13; the branch passage 14 branched from the connecting passage 13 at the upstream side of the switching valve 50 so as to communicate with the tank T; and the emergency operation valve 60 provided in the branch passage 14, the emergency operation valve 60 being configured to open and close the branch passage 14 by being operated manually, wherein the emergency operation valve 60 has: the valve main body 11; and the valve body 61 accommodated in the accommodating hole 16 formed in the valve main body 11, the valve body 61 being configured to open and close the branch passage 14, and wherein the valve body 61 includes: the main body portion 62 having the screw portion 62a threaded into the valve main body 11; and the seat portion 63 formed on the tip end of the main body portion 62, the seat portion 63 being configured to open and close the branch passage 14 by being seated on and separated from the valve seat 16c provided in the accommodating hole 16.

According to this configuration, because the valve body 61 of the emergency operation valve 60 can be configured as one member, it is possible to simplify the structure. With such a configuration, because it is possible to perform assembly and operation of the emergency operation valve 60 only by one hand, the work efficiency can be improved.

In addition, with the valve device (the back-pressure control valve 40), the accommodating hole 16 includes: the fastening bore 16a formed with a female screw threaded with the screw portion 62a; the fitting hole 16b having a smaller diameter than the fastening bore 16a, the seat portion 63 being configured to fit to the fitting hole 16b; and the plastically deformed portion 16d formed in the boundary between the fastening bore 16a and the fitting hole 16b, the plastically deformed portion 16d being plastically deformed by the seat portion 63, wherein the plastically deformed portion 16d functions as the valve seat 16c.

In this configuration, by threading the valve body 61, the valve seat 16c is pressed and squeezed by the seat portion 63, and the plastically deformed portion 16d is formed. With such a configuration, because a state in which the valve seat 16c is brought into contact with the seat portion 63 at its surface, it is possible to prevent the leakage of the working oil from between the valve seat 16c and the seat portion 63 with high reliability. Furthermore, because the frictional resistance between the valve seat 16c and the seat portion 63 is increased, it is possible to prevent the valve body 61 from being loosened. Therefore, there is no need to provide a locking device of the valve body 61, and so, it is possible to reduce the number of parts.

In addition, with the valve device (the back-pressure control valve 40), the projected portion 62b is formed on the outer circumferential surface of the main body portion 62 so as to project outwards in the radial direction, and the movement of the valve body 61 is restricted as the projected portion 62b is brought into contact with the restricting member (the bolt 70) attached to the valve main body 11.

According to this configuration, because the movement of the valve body 61 is restricted as the projected portion 62b is brought into contact with the restricting member (the bolt 70), it is possible to prevent the valve body 61 from falling off from the valve main body 11.

In addition, the switching valve 50 is provided in the valve main body 11.

According to this configuration, because the switching valve 50 is provided integrally with the emergency operation valve 60, it is possible to reduce the size of the device.

In addition, the control valve 20 is provided in the valve main body 11, the control valve 20 being configured to control the moving direction of the fluid pressure actuator (the lift cylinder 2).

According to this configuration, because the control valve 20 is provided integrally with the valve device (the back-pressure control valve 40), it is possible to reduce the size of the device.

Embodiments of this invention were described above, but the above embodiments are merely examples of applications of this invention, and the technical scope of this invention is not limited to the specific constitutions of the above embodiments.

In the above-mentioned embodiment, a description has been given of the example in which the valve device (the back-pressure control valve 40) is applied to the hydraulic pressure circuit for controlling the single acting lift cylinder 2 serving as the fluid pressure actuator; however, the configuration is not limited thereto, and the valve device (the back-pressure control valve 40) may be applied to a fluid pressure circuit utilizing a fluid pressure motor and a double acting fluid pressure cylinder that holds a load.

The control valve 20 and the operation check valve 30 may respectively be provided in separate valve main bodies.

This application claims priority based on Japanese Patent Application No.2015-252110 filed with the Japan Patent Office on December 24, 2015, the entire contents of which are incorporated into this specification.

## Claims

1. A valve device for controlling pressure in a back pressure chamber of an operation check valve that blocks a flow of working fluid discharged from a pressure chamber of a fluid pressure actuator in accordance with the pressure in the back pressure chamber, the valve device comprising:
a connecting passage configured to connect the back pressure chamber of the operation check valve to a tank;
a switching valve provided in the connecting passage, the switching valve being configured to open and close the connecting passage;
a branch passage branched from the connecting passage at the upstream side of the switching valve so as to communicate with the tank; and
an emergency operation valve provided in the branch passage, the emergency operation valve being configured to open and close the branch passage by being operated manually, wherein
the emergency operation valve has:
a valve main body; and
a valve body accommodated in an accommodating hole formed in the valve main body, the valve body being configured to open and close the branch passage, and wherein
the valve body includes:
a main body portion having a screw portion threaded into the valve main body; and
a seat portion formed on a tip end of the main body portion, the seat portion being configured to open and close the branch passage by being seated on and separated from a valve seat provided in the accommodating hole.

2. The valve device according to claim 1, wherein
the accommodating hole includes:
a fastening bore formed with a female screw threaded with the screw portion;
a fitting hole having a smaller diameter than the fastening bore, the seat portion being configured to fit to the fitting hole; and
a plastically deformed portion formed in a boundary between the fastening bore and the fitting hole, the plastically deformed portion being plastically deformed by the seat portion, wherein
the plastically deformed portion functions as the valve seat.

3. The valve device according to claim 1, wherein
a projected portion is formed on an outer circumferential surface of the main body portion so as to project outwards in a radial direction, and
movement of the valve body is restricted as the projected portion is brought into contact with a restricting member attached to the valve main body.

4. The valve device according to claim 1, wherein
the switching valve is provided in the valve main body.

5. The valve device according to claim 1, wherein
a control valve is further provided in the valve main body, the control valve being configured to control a moving direction of the fluid pressure actuator.
